# EUROPÄISCHE PATENTSCHRIFT

(11) **EP 3 947 003 B1**
(45) Veröffentlichungstag und Bekanntmachung des Hinweises auf die Patenterteilung: **02.08.2023**
(21) Anmeldenummer: 20711906.6
(22) Anmeldetag: 16.03.2020
(51) Int. Cl.: G06F 3/01, G06F 3/04847, B60K 35/00

(54) **VERFAHREN UND VORRICHTUNG ZUR BEEINFLUSSUNG EINER OPTISCHEN AUSGABE VON BILDDATEN AUF EINER AUSGABEEINRICHTUNG IN EINEM FAHRZEUG**
METHOD AND APPARATUS FOR INFLUENCING AN OPTICAL OUTPUT OF IMAGE DATA ON AN OUTPUT DEVICE IN A VEHICLE
PROCÉDÉ ET DISPOSITIF POUR INFLUENCER UNE SORTIE OPTIQUE DE DONNÉES D'IMAGE SUR UN DISPOSITIF DE SORTIE DANS UN VÉHICULE

(30) Priorität: 02.04.2019 DE 102019002403
(43) Veröffentlichungstag der Anmeldung: 09.02.2022
(73) Patentinhaber: Mercedes-Benz Group AG, 70372 Stuttgart (DE)
(72) Erfinder: SCHMID, Thomas, 71154 Nufringen (DE); ENZMANN, Holger, 71155 Altdorf (DE); PATZELT, Christian, 70374 Stuttgart (DE); GULDE, Gerd, 72119 Ammerbuch (DE); HALLIER, Nina, 71101 Schönaich (DE)
(74) Vertreter: Novagraaf Group
(86) Internationale Anmeldenummer: PCT/EP2020/057060
(87) Internationale Veröffentlichungsnummer: WO 2020/200720

(56) Entgegenhaltungen:
- DE-A1-102011 084 887
- DE-A1-102016 007 493

## Beschreibung

Die Erfindung betrifft ein Verfahren und eine Vorrichtung zur Beeinflussung einer optischen Ausgabe von Bilddaten auf einer optischen Ausgabeeinrichtung in einem Fahrzeug, insbesondere in einem Kraftfahrzeug, sowie ein Fahrzeug mit einer ebensolchen Vorrichtung.

Die Wiedergabe von Bilddaten, insbesondere von Bewegtbildern, wie: Videos, Animationen, Clips etc. auf optischen Ausgabeeinrichtungen, die vom Fahrer des Fahrzeugs einsehbar sind, ist in zahlreichen Ländern aus Sicherheitsgründen während des Betriebs des Fahrzeugs aufgrund des hohen Ablenkungspotenzials für den jeweiligen Fahrer nicht gestattet.

Die DE 10 2016 007 493 offenbart ein Verfahren, bei dem eine Ausgabeeinrichtung abgedunkelt wird, wenn ein Fahrer seinen Blick abwendet. Die Änderung der Helligkeit erfolgt dabei je nach Situation unverzüglich oder allmählich.

Um gleichwohl beispielsweise für einen neben dem Fahrer sitzenden Beifahrer die Wiedergabe von Bilddaten mittels einer solchen optischen Ausgabeeinrichtung zu ermöglichen, ist beispielsweise aus der Druckschrift DE 10 2011 084 887 A1 ein Verfahren sowie eine Vorrichtung zur Beeinflussung der Aufmerksamkeit eines Fahrers eines Kraftfahrzeugs bekannt, welches ein System mit einer optischen Ausgabeeinrichtung umfasst.

Das in dieser Druckschrift offenbarte Verfahren umfasst die Schritte: Feststellen, dass der Fahrer des Fahrzeugs seine Aufmerksamkeit auf die Ausgabeeinrichtung richtet, und wenn ein für den zeitlichen Umfang und/oder die Häufigkeit, in dem bzw. mit der der Fahrer seine Aufmerksamkeit auf die Ausgabeeinrichtung richtet, charakteristisches Maß einen bestimmten Schwellwert erreicht oder überschreitet, Ausblenden von Informationen auf der Ausgabeeinrichtung. Damit sind die auf der Ausgabeeinrichtung ausgegebenen Informationen weder für den Fahrer noch für den Beifahrer erkennbar, sodass der Fahrer angeregt wird, seine Aufmerksamkeit weg von der Benutzerschnittstelle und damit wieder auf die Straße zu richten.

Das Ausblenden der Information auf der Ausgabeeinrichtung kann gemäß der genannten Druckschrift bei einem Bildschirm als Ausgabeeinrichtung durch einfaches Löschen des gesamten Bildschirminhalts erfolgen. Es können auch nur einige oder mehrere Teile des Bildschirminhalts, die beispielsweise einzelne Funktionen betreffen ausgeblendet, insbesondere gelöscht werden.

Aufgabe der Erfindung ist es, das Verfahren bzw. die Vorrichtung gemäß der Druckschrift DE 10 2011 084 887 A1 derart weiterzubilden, dass die Nutzerfreundlichkeit und damit auch die Verkehrssicherheit erhöht wird.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zur Beeinflussung einer optischen Ausgabe von Bilddaten auf einer Ausgabeeinrichtung in einem Fahrzeug, mit folgenden Schritten:
- im Fahrzeug Ermitteln einer Blickrichtung eines Fahrers des Fahrzeugs,
- sofern die ermittelte Blickrichtung auf die Ausgabeeinrichtung gerichtet wird, Ausblenden der optischen Ausgabe der Bilddaten mit einer mittleren Ausblendrate DOWN, wobei die Ausblendrate DOWN eine zeitliche Abnahme der optischen Wahrnehmbarkeit der ausgegebenen Bilddaten durch einen Menschen definiert, und
- sofern die ermittelte Blickrichtung auf die Ausgabeeinrichtung gerichtet ist und von der Ausgabeeinrichtung weg gerichtet wird, Aufblenden der optischen Ausgabe der Bilddaten mit einer mittleren Aufblendrate UP, wobei die Aufblendrate UP eine zeitliche Zunahme der optischen Wahrnehmbarkeit der ausgegebenen Bilddaten durch einen Menschen beschreibt.

Der Begriff "Bilddaten" wird vorliegend breit verstanden. Er umfasst die Ausgabe von alphanumerischen Zeichen, Grafiken, Bildern, Videobildern, Fernsehbildern, Internetinhalten, Fahrzeugdaten, Navigationsdaten des Fahrzeugs etc. Vorteilhaft umfassen die optisch ausgegebenen Bilddaten für die Fahrzeugführung relevante Daten DAT1 sowie sonstige Bilddaten DAT2. So können beispielsweise die Daten DAT2 Videoinhalte, Internetinhalte und/oder Fotoinhalte und die Daten DAT1 Dynamikdaten und/oder Navigationsdaten und/oder andere Daten zur Führung des Fahrzeugs und/oder zur Steuerung von Systemen des Fahrzeugs umfassen.

Der Begriff "Ausgabeeinrichtung" zur optischen Ausgabe der Bilddaten wird vorliegend breit verstanden. Die Ausgabeeinrichtung umfasst grundsätzlich alle heute bekannten Vorrichtungen zur optischen Ausgabe von Bilddaten wie beispielsweise: FED-, LCD-, TFT-, LCD-, CRT-, Plasma-, OLED- oder SED-Displays, Touch Screens, und LED-, Laser-Projektionssysteme, insbesondere HUD's (Head UP Display's).

Der Begriff "Fahrzeug" wird vorliegend breit verstanden. Er umfasst insbesondere Landfahrzeuge (Kraftfahrzeuge, Busse, LKW, etc.), Luftfahrzeuge, Wasserfahrzeuge, Unterwasserfahrzeuge, Schienenfahrzeuge.

Der Begriff "Blickrichtung" des Fahrers bezeichnet vorliegend die Richtung, in welche der Fahrer mit seinen Augen aktuell blickt.

Der Begriff "Ausblenden" beschreibt vorliegend, dass die Wahrnehmbarkeit von auf der Ausgabeeinrichtung optisch angezeigten Bilddaten insbesondere graduell oder schrittweise reduziert wird. Der Vorgang des Ausblendens verläuft vorzugsweise über einen vorgegebenen Zeitraum > 0 und führt nach dessen ungestörtem Ablauf dazu, dass von einem Menschen auf der Ausgabeeinrichtung keine Bilddaten mehr erkennbar sind.

Der Begriff "mittlere Ausblendrate, DOWN" beschreibt die über die Zeit gemittelte Verringerung der Wahrnehmbarkeit der optisch angezeigten Bilddaten. Dabei wird davon ausgegangen, dass bevor ein Ausblenden von Bilddaten erfolgt, auf der Ausgabeeinheit optisch angezeigte Bilddaten grundsätzlich eine Wahrnehmbarkeit von 100% aufweisen, indem beispielsweise die anzuzeigenden Bilddaten in einer für die Ausgabeeinheit optimalen Pixel-Auflösung, optimalen Trennschärfe, optimalen Helligkeit etc. angezeigt werden, sodass eine optimale Wahrnehmbarkeit gegeben ist.

Der Begriff "Aufblenden" beschreibt vorliegend, dass die Wahrnehmbarkeit von auf der Ausgabeeinrichtung optisch angezeigten Bilddaten insbesondere graduell oder schrittweise erhöht bzw. verbessert wird.

Der Begriff "mittlere Aufblendrate, UP" beschreibt die über die Zeit gemittelte Erhöhung/ Verbesserung der Wahrnehmbarkeit der optisch angezeigten Bilddaten.

Das "Aufblenden" ist vorliegend somit das Gegenteil von "Ausblenden". Das "Aufblenden" setzt weiterhin voraus, dass zuvor die angezeigten Bilddaten in ihrer Wahrnehmbarkeit zumindest teilweise reduziert, d.h. ausgeblendet wurden. Der Vorgang des Aufblendens verläuft vorzugsweise über einen vorgegebenen Zeitraum > 0 und führt nach dessen ungestörtem Ablauf dazu, dass von einem Menschen auf der Ausgabeeinrichtung angezeigte Bilddaten mit einer Wahrnehmbarkeit von 100 % erkennbar sind.

Bei dem vorgeschlagenen Verfahren wird somit insbesondere während des Betriebs des Fahrzeugs, vorteilhaft kontinuierlich, die Blickrichtung des Fahrers ermittelt und geprüft, ob die Blickrichtung und damit die Aufmerksamkeit des Fahrers auf die Ausgabeeinrichtung gerichtet ist. Wird dabei erkannt, dass der Fahrer in Richtung Ausgabeeinrichtung blickt, werden auf der Ausgabeeinrichtung optisch angezeigte Bilddaten mit einer mittleren Ausblendrate DOWN ausgeblendet. Damit wird Fahrer angeregt, seinen Blick von der Ausgabeeinrichtung weg, wieder dem Verkehrsgeschehen zuzuwenden.

Blickt der Fahrer auf die Ausgabeeinrichtung und wendet er seinen Blick von der Ausgabeeinrichtung weg (zunächst egal wohin), erfolgt erfindungsgemäß ein Aufblenden der optischen Ausgabe der Bilddaten mit einer mittleren Aufblendrate UP.

Erfindungsgemäß gilt für das Verfahren: UP > DOWN, d.h. die Rate, mit der die Wahrnehmbarkeit der angezeigten Bilddaten reduziert wird, ist kleiner als die Rate, mit der die Wahrnehmbarkeit von in ihrer Wahrnehmbarkeit reduzierten Bilddaten erhöht wird. Vorteilhaft ist die Ausgabeeinrichtung ein Display, das im Fahrzeug derart angeordnet ist, dass die ausgegebenen Bilddaten insbesondere für einen neben dem Fahrer positionierten Beifahrer sichtbar sind.

Das Verfahren wird vorteilhaft immer dann angewendet, wenn das Fahrzeug schneller als eine vorgegebene Geschwindigkeit ≥ 0 fährt.

Damit wird einerseits erreicht, dass der Fahrer angeregt wird, während des Betriebs bzw. insbesondere während des Fahrens des Fahrzeugs seine Aufmerksamkeit auf die Führung des Fahrzeugs und nicht auf die Ausgabeeinrichtung zu lenken. Andererseits kann dadurch ein neben dem Fahrer positionierter Beifahrer die optischen Ausgaben der Bilddaten auf der Ausgabeeinrichtung betrachten.

Sofern überhaupt ein Beifahrer vorhanden ist, wird er, sofern er Interesse an der Betrachtung der optisch ausgegebenen Bilddaten hat, zusätzlich einen gewissen psychologischen Druck auf den Fahrer ausüben, der bewirkt, dass der Fahrer nicht auf die Ausgabeeinrichtung schaut, so dass ein ungestörtes Betrachten der ausgegebenen Bilddaten durch den Beifahrer möglich ist. Insgesamt wird dadurch einerseits eine nutzerfreundliche Beeinflussung der optischen Ausgabe erreicht, die andererseits die Verkehrssicherheit weiter erhöht.

In einer Weiterbildung des vorgeschlagenen Verfahrens erfolgt das Aufblenden der optischen Ausgabe der Bilddaten nur dann, wenn der Fahrer seine Aufmerksamkeit auf vorgegebene Bereiche, wie beispielsweise das voraus liegende Verkehrsgeschehen richtet.

Vorteilhaft ist die Ausgabeeinrichtung ein Head-Up-Display, das Bilddaten projiziert, die für einen neben dem Fahrer positionierten Beifahrer sichtbar sind.

Vorteilhaft erfolgt das Ausblenden und Aufblenden der Bilddaten nur für die Daten DAT2, das heißt nur für Bilddaten, die nicht der Fahrzeugführung / Fahrzeugnavigation dienen.

Vorteilhaft erfolgt das Ermitteln der Blickrichtung durch ein Kamera-System, das zur Erfassung von Pupillenpositionen der Augen des Fahrers und zur Ermittlung der Blickrichtung auf Basis der Pupillenpositionen ausgeführt und eingerichtet ist. Vorteilhaft ist das Kamera-System im Bereich des Armaturenbretts vor dem Fahrer und/oder im Bereich des Fahrzeughimmels vor dem Fahrer angeordnet. Vorteilhaft umfasst das Kamera-System eine Stereo-Kamera.

Eine vorteilhafte Weiterbildung des vorgeschlagenen Verfahrens zeichnet sich dadurch aus, dass die Abnahme oder die Zunahme der Wahrnehmbarkeit der ausgegebenen Bilddaten durch eine Abnahme oder Zunahme einer Lichtintensität LI der Bilddatenausgabe bewirkt wird. Vorteilhaft sind hierzu die Lichtintensität LI der Bilddatenausgabe zwischen 0 und einem vorgegebenen Maximalwert LI_{MAX} veränderbar: LI ∈ [0,..,*LI_{MAX}*].

Zusätzlich oder alternativ wird die Abnahme oder die Zunahme der Wahrnehmbarkeit der ausgegebenen Bilddaten durch eine Zunahme oder Abnahme einer Unschärfe der Bilddatenausgabe bewirkt. Vorteilhaft wird die Unschärfe durch eine Defokussierung der ausgegebenen Bilddaten und/oder durch eine Überlagerung der ausgegebenen Bilddaten mit Bilddaten, die eine Fläche mit veränderbarer Transparenz erzeugen, bewirkt. So sind, im Falle einer vollständigen Ausblendung der Bilddaten, die Transparenz der Fläche gleich null, d.h. es wird beispielsweise nur noch eine homogene Farbfläche angezeigt, jedoch keine Bilddaten ausgegeben.

Eine vorteilhafte Weiterbildung des vorgeschlagenen Verfahrens zeichnet sich dadurch aus, dass das Ausblenden der optischen Ausgabe der Bilddaten mit einer Treppenfunktion T_{AUSBLENDEN}(t) realisiert wird, bei der die Lichtintensität LI stufenweise verringert wird und/oder bei der die Unschärfe der Bilddatenausgabe stufenweise erhöht wird.

Eine vorteilhafte Weiterbildung des vorgeschlagenen Verfahrens zeichnet sich dadurch aus, dass das Aufblenden der optischen Ausgabe der Bilddaten mit einer Treppenfunktion T_{AUFBLENDEN}(t) realisiert wird, bei der die Lichtintensität LI der Bilddatenausgabe stufenweise erhöht wird, und/oder bei der die Unschärfe der Bilddatenausgabe stufenweise verringert wird.

Vorteilhaft ist die Treppenfunktion T_{AUSBLENDEN}(t) und/oder T_{AUFBLENDEN}(t) mit äquidistanten Stützstellen t = tₙ = t₀ + (n-1)*Δt realisiert, mit n = 0, 1, 2, ...., t₀ eine Startzeit, und Δt ein vorgegebener Zeitschritt.

Eine vorteilhafte Weiterbildung des vorgeschlagenen Verfahrens zeichnet sich dadurch aus, dass eine Frequenz ermittelt wird, mit der die Blickrichtung des Fahrers auf die Ausgabeeinheit und/oder die Blickrichtung des Fahrers von der Ausgabeeinheit weg gerichtet wird, wobei mit zunehmender Frequenz die Ausblendrate DOWN erhöht wird.

Eine vorteilhafte Weiterbildung des vorgeschlagenen Verfahrens zeichnet sich dadurch aus, dass eine Frequenz ermittelt wird, mit der die Blickrichtung des Fahrers auf die Ausgabeeinheit und/oder die Blickrichtung des Fahrers von der Ausgabeeinheit weg gerichtet wird, wobei mit zunehmender Frequenz die Ausblendrate DOWN erhöht und/oder die Aufblendrate UP verringert wird.

Vorteilhaft wird dabei die Ausblendrate DOWN und/oder die Aufblendrate UP derart verändert wird, dass gilt: UP > DOWN.

Sofern die ermittelte Blickrichtung auf die Ausgabeeinrichtung gerichtet wird, beginnt das Ausblenden der optischen Ausgabe der Bilddaten mit einer mittleren Ausblendrate DOWN, vorteilhaft mit einem Zeitversatz ZV_{DOWN}. In anderen Worten, wird zum Zeitpunkt t* ermittelt, dass der Fahrer auf die Ausgabeeinrichtung blickt, erfolgt ein Ausblenden der optischen Ausgabe der Bilddaten erst zu einem Zeitpunkt t = t* + ZV_{DOWN}. Blickt der Fahrer nur für einen Augenblick auf die Ausgabeeinrichtung und anschließend wieder weg, so erfolgt kein Ausblenden der Bilddaten, sodass für einen Beifahrer eine unveränderte Wahrnehmbarkeit der Bilddaten ohne Störung möglich ist. Erst wenn der Fahrer länger als die Zeitspanne ZV_{DOWN} auf die Ausgabeeinrichtung blickt, erfolgt somit das Ausblenden der Bilddaten.

Eine vorteilhafte Weiterbildung des vorgeschlagenen Verfahrens zeichnet sich dadurch aus, dass, sofern die ermittelte Blickrichtung des Fahrers auf die Ausgabeeinrichtung gerichtet ist und von der Ausgabeeinrichtung weg gerichtet wird, das Aufblenden der optischen Ausgabe der Bilddaten erst mit einem Zeitversatz ZV_{UP} beginnt. In anderen Worten, wird zum Zeitpunkt t** ermittelt, dass der Fahrer von der Ausgabeeinrichtung weg blickt, erfolgt ein Aufblenden der optischen Ausgabe der Bilddaten erst zu einem Zeitpunkt t = t** + ZV_{UP}. Blickt der Fahrer nur für einen Augenblick von der Ausgabeeinrichtung weg und anschließend wieder darauf, so erfolgt somit kein Aufblenden der Bilddaten. Erst wenn der Fahrer länger als die Zeitspanne ZV_{UP} von der Ausgabeeinrichtung weg blickt, erfolgt somit das Aufblenden der Bilddaten.

Ein weiterer Aspekt der Erfindung betrifft ein System, mit dem Bilddaten auf einer Ausgabeeinrichtung in einem Fahrzeug optisch ausgebbar sind. Das System umfasst ein im Fahrzeug angeordnetes Sensorsystem, das dazu ausgeführt und eingerichtet ist, eine Blickrichtung eines Fahrers des Fahrzeugs zu ermitteln, eine Steuereinheit der Ausgabeeinrichtung, die dazu ausgeführt und eingerichtet ist, dass sofern die ermittelte Blickrichtung auf die Ausgabeeinrichtung gerichtet wird, ein Ausblenden der optischen Ausgabe der Bilddaten mit einer mittleren Ausblendrate DOWN erfolgt, wobei die Ausblendrate DOWN eine zeitliche Abnahme der optischen Wahrnehmbarkeit der ausgegebenen Bilddaten durch einen Menschen definiert, und sofern die ermittelte Blickrichtung auf die Ausgabeeinrichtung gerichtet ist und von der Ausgabeeinrichtung weg gerichtet wird, ein Aufblenden der optischen Ausgabe der Bilddaten mit einer mittleren Aufblendrate UP erfolgt, wobei die Aufblendrate UP eine zeitliche Zunahme der optischen Wahrnehmbarkeit der ausgegebenen Bilddaten durch einen Menschen beschreibt.

Vorteilhaft ist die Steuereinheit derart eingerichtet und ausgeführt, das gilt: UP > DOWN.

Die optisch ausgebbaren Bilddaten umfassen vorteilhaft lediglich zwei Klassen von Bilddaten: erstens für die Fahrzeugführung relevante Daten DAT1 und zweitens sonstige Daten DAT2. Vorteilhaft ist die Steuereinheit derart eingewickelt ausgeführt, dass das Ausblenden und Aufblenden der Bilddaten nur für die Daten DAT2 erfolgt. Vorteilhaft repräsentieren die Daten DAT2 Videoinhalte, Internetinhalte und/oder Fotoinhalte, d.h. insbesondere Bildinhalte, die zur Unterhaltung dienen.

Vorteilhaft repräsentieren die Daten DAT1 Dynamikdaten und/oder Navigationsdaten und/oder andere Daten, die ausschließlich zur Führung des Fahrzeugs und/oder zur Steuerung von Systemen des Fahrzeugs dienen.

Vorteilhaft ist die Ausgabeeinheit ein Display, auf dem Bilddaten insbesondere auch zur Ansicht für einen neben dem Fahrer positionierten Beifahrer ausgegebbar sind. Alternativ ist die Ausgabeeinheit ein Head-Up-Display, das Bilddaten projiziert, die für einen neben dem Fahrer positionierten Beifahrer einsehbar sind.

Das Sensorsystem umfasst vorteilhaft ein Kamera-System, das zur Erfassung von Pupillenpositionen der Augen des Fahrers und zur Ermittlung der Blickrichtung auf Basis der Pupillenpositionen ausgeführt und eingerichtet ist. Hierzu sind dem Sensorsystem vorteilhaft die Geometrie des in Fahrtrichtung vorderen Bereichs der Fahrzeugkabine, die Sitzposition eines Fahrers sowie die Anordnung und Position der Ausgabeeinrichtung bekannt. Vorteilhaft ist das Kamera-System im Bereich des Armaturenbretts vor dem Fahrer und/oder im Bereich des Fahrzeughimmels vor dem Fahrer angeordnet. Vorteilhaft umfasst das Kamera-System eine Stereo-Kamera.

Vorteilhaft ist die Steuereinheit derart ausgeführt und eingerichtet, dass die Abnahme oder die Zunahme der Wahrnehmbarkeit der ausgegebenen Bilddaten durch eine Abnahme oder Zunahme einer Lichtintensität LI der Bilddatenausgabe bewirkt wird.

Vorteilhaft ist die Steuereinheit derart ausgeführt und eingerichtet, dass die Lichtintensität LI der Bilddatenausgabe dabei zwischen 0 und einem vorgegebenen Maximalwert LI_{MAX} veränderbar ist: LI ∈ [0,..,*LI_{MAX}* ].

Vorteilhaft ist die Steuereinheit derart ausgeführt und eingerichtet, dass die Abnahme oder die Zunahme der Wahrnehmbarkeit der ausgegebenen Bilddaten durch eine Zunahme oder Abnahme einer Unschärfe der Bilddatenausgabe bewirkt wird.

Vorteilhaft ist die Steuereinheit derart ausgeführt und eingerichtet, dass die Unschärfe durch eine Defokussierung der ausgegebenen Bilddaten und/oder durch eine Überlagerung der ausgegebenen Bilddaten mit Bilddaten, die eine Fläche mit veränderbarer Transparenz erzeugen, bewirkt wird.

Vorteilhaft ist die Steuereinheit derart ausgeführt und eingerichtet, dass das Ausblenden der optischen Ausgabe der Bilddaten mit einer Treppenfunktion T_{AUSBLENDEN}(t) realisiert wird, bei der die Lichtintensität LI stufenweise verringert wird und/oder bei der die Unschärfe der Bilddatenausgabe stufenweise erhöht wird.

Vorteilhaft ist die Steuereinheit derart ausgeführt und eingerichtet, dass das Aufblenden der optischen Ausgabe der Bilddaten mit einer Treppenfunktion T_{AUFBLENDEN}(t) realisiert wird, bei der die Lichtintensität LI der Bilddatenausgabe stufenweise erhöht wird, und/oder bei der die Unschärfe der Bilddatenausgabe stufenweise verringert wird.

Vorteilhaft ist die Treppenfunktion T_{AUSBLENDEN}(t) und/oder T_{AUFBLENDEN}(t) mit äquidistanten Stützstellen t = tₙ = t₀ + (n-1)*Δt realisiert, mit n = 0, 1, 2, ...., t₀ eine Startzeit, und Δt ein vorgegebener Zeitschritt.

Vorteilhaft ist die Steuereinheit derart ausgeführt und eingerichtet, dass eine Frequenz ermittelt wird, mit der die Blickrichtung des Fahrers auf die Ausgabeeinheit gerichtet wird, wobei mit zunehmender Frequenz die Ausblendrate DOWN erhöht wird.

Vorteilhaft ist die Steuereinheit derart ausgeführt und eingerichtet, dass eine Frequenz ermittelt wird, mit der die Blickrichtung des Fahrers auf die Ausgabeeinheit gerichtet wird, wobei mit zunehmender Frequenz die Ausblendrate DOWN erhöht und/oder die Aufblendrate UP verringert wird.

Vorteilhaft wird dabei die Ausblendrate DOWN und/oder die Aufblendrate UP derart verändert, dass gilt: UP > DOWN.

Vorteilhaft ist die Steuereinheit derart ausgeführt und eingerichtet, dass sofern die ermittelte Blickrichtung des Fahrers auf die Ausgabeeinrichtung gerichtet wird, das Ausblenden der optischen Ausgabe der Bilddaten mit einem Zeitversatz ZV_{DOWN} beginnt.

Vorteilhaft ist die Steuereinheit derart ausgeführt und eingerichtet, dass sofern die ermittelte Blickrichtung des Fahrers auf die Ausgabeeinrichtung gerichtet ist und von der Ausgabeeinrichtung weg gerichtet wird, das Aufblenden der optischen Ausgabe der Bilddaten mit einem Zeitversatz ZV_{UP} beginnt.

Ein letzter Aspekt der Erfindung betrifft ein Fahrzeug mit einem System, wie vorstehend beschrieben.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: einen stark schematisierten Ablauf eines erfindungsgemäßen Verfahrens,
- Fig. 2: ein Beispiel einer Veränderung der Wahrnehmbarkeit der ausgegebenen Bilddaten, wobei der Fahrer zu einem Zeitpunkt auf die Ausgabeeinrichtung blickt und seinen Blick nicht abwendet,
- Fig. 3: ein Beispiel einer Veränderung der Wahrnehmbarkeit der ausgegebenen Bilddaten, wobei der Fahrer zu einem Zeitpunkt auf die Ausgabeeinrichtung blickt und seinen Blick wieder von der Ausgabeeinrichtung wegwendet, und
- Fig. 4: einen stark schematisierten Aufbau eines erfindungsgemäßen Systems.

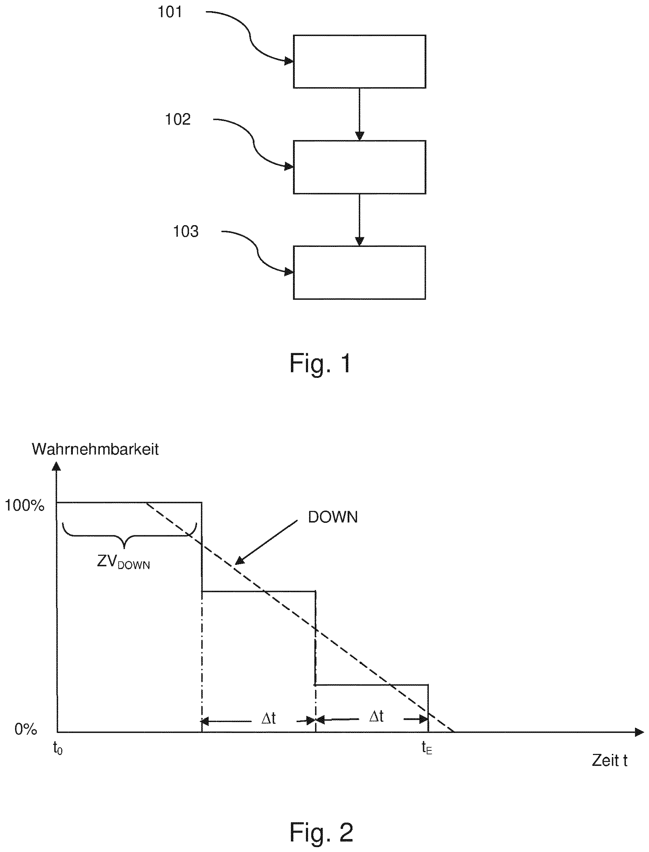

Fig. 1 zeigt einen stark schematisierten Ablauf eines erfindungsgemäßen Verfahrens zur Beeinflussung einer optischen Ausgabe von Bilddaten auf einer Ausgabeeinrichtung in einem Fahrzeug, mit folgenden Schritten. In einem Schritt 101 erfolgt im Fahrzeug ein Ermitteln einer Blickrichtung eines Fahrers des Fahrzeugs. In einem Schritt 102 erfolgt, sofern die ermittelte Blickrichtung auf die Ausgabeeinrichtung gerichtet wird, ein Ausblenden der optischen Ausgabe der Bilddaten mit einer mittleren Ausblendrate DOWN, wobei die Ausblendrate DOWN eine zeitliche Abnahme der optischen Wahrnehmbarkeit der ausgegebenen Bilddaten durch einen Menschen definiert. In einem Schritt 103 erfolgt, sofern die ermittelte Blickrichtung auf die Ausgabeeinrichtung gerichtet ist und von der Ausgabeeinrichtung weg gerichtet wird, ein Aufblenden der optischen Ausgabe der Bilddaten mit einer mittleren Aufblendrate UP, wobei die Aufblendrate UP eine zeitliche Zunahme der optischen Wahrnehmbarkeit der ausgegebenen Bilddaten durch einen Menschen beschreibt. Insbesondere gilt: UP > DOWN.

Fig. 2 zeigt ein Beispiel einer Veränderung der Wahrnehmbarkeit der ausgegebenen Bilddaten, wobei der Fahrer zu einem Zeitpunkt t₀ auf die Ausgabeeinrichtung blickt und seinen Blick für eine längere Zeit, bspw. 10 s nicht abwendet.

Bei dem dargestellten Diagramm ist entlang der x-Achse die Zeit t und entlang der y-Achse die Wahrnehmbarkeit der auf der Ausgabeeinrichtung angezeigten Bilddaten in Prozent [%] angegeben. Die Wahrnehmbarkeit von 100 % entspricht vorliegend einer für die Ausgabeeinrichtung optimalen Ausgabe von Bilddaten. Bei der Wahrnehmbarkeit von 0 % können auzugegebene Bilddaten von einem Menschen nicht wahrgenommen werden.

Wie bereits vorstehend beschrieben, kann die Wahrnehmbarkeit beispielsweise verändert werden durch: Änderung der Bildhelligkeit der auf der Ausgabeeinrichtung auszugebenden Bilddaten und/oder durch Änderung der Unschärfe der auszugebenden Bilddaten. So entspricht die Wahrnehmbarkeit von 0 % beispielsweise einem "schwarzen" Bildschirm, bei dem die Bildhelligkeit der auszugebenden Bilddaten gleich null ist oder sie entspricht beispielsweise einer Unschärfe der ausgegebenen Bilddaten, die keinerlei Erkennbarkeit der auszugebenden Bilddaten ermöglicht.

In der dargestellten Grafik wird der Verlauf der Wahrnehmbarkeit der auszugebenden Bilddaten für den Fall dargestellt, dass die auszugebenden Bilddaten zunächst mit einer Wahrnehmbarkeit von 100 % auf der Ausgabeeinrichtung dargestellt werden und zur Zeit to ermittelt wird, dass der Fahrer auf die Ausgabeeinrichtung blickt.

Das Ausblenden 102 der optischen Ausgabe der auszugebenden Bilddaten mit einer mittleren Ausblendrate DOWN beginnt jedoch nicht zur Zeit t₀ sondern mit einem Zeitversatz ZV_{DOWN}, der beispielsweise 2, 3 oder 4 Sekunden beträgt.

Das Ausblenden 102 der optischen Ausgabe der Bilddaten ist in diesem Ausführungsbeispiel mit einer Treppenfunktion T_{AUSBLENDEN}(t) realisiert, bei der eine Lichtintensität LI der Bilddaten-Ausgabe stufenweise verringert wird und/oder bei der eine Unschärfe der Bilddatenausgabe stufenweise erhöht wird, so dass die Wahrnehmbarkeit der auszugebenden Bilddaten mit einer mittleren Ausblendrate DOWN (repräsentiert durch die gestrichelte Linie) verringert wird. Die Treppenfunktion T_{AUSBLENDEN}(t) ist vorliegend mit äquidistanten Stützstellen t = tₙ = t₀ + (n-1)*Δt realisiert, wobei n = 0, 1, 2, ...., t₀ eine Startzeit, und Δt ein vorgegebener Zeitschritt sind.

Natürlich kann das Ausblenden 102 der optischen Ausgabe der Bilddaten auch mit einer beliebigen anderen Zeitfunktion f(t) erfolgen.

Die Zeitspanne von t₀ bis t_{E} beträgt vorteilhaft 5 bis 15 Sekunden.

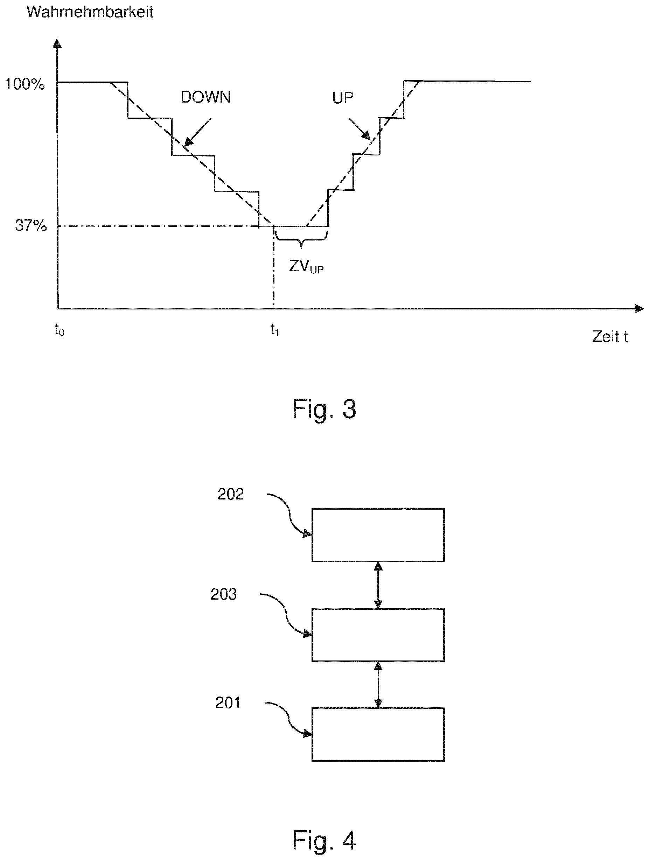

Fig. 3 zeigt ein Beispiel einer Veränderung der Wahrnehmbarkeit der ausgegebenen Bilddaten, wobei der Fahrer zur Zeit t₀ zunächst auf die Ausgabeeinrichtung blickt und seinen Blick zu einem Zeitpunkt t₁ wieder von der Ausgabeeinrichtung wegwendet. Die Zeitdifferenz zwischen t₀ und t₁ ist im gezeigten Beispiel zu gering, als dass die Wahrnehmbarkeit der auszugebenden Bilddaten durch das Ausblenden 0 % erreicht hätte. Die Wahrnehmbarkeit der ausgegebenen Bilddaten beträgt zur Zeit t₁: 37 %.

Das Aufblenden 103 der optischen Ausgabe der Bilddaten erfolgt mit einem Zeitversatz ZV_{UP}, beispielsweise von 2 Sekunden mit einer mittleren Aufblendrate UP. Aufblenden 103 der optischen Ausgabe der Bilddaten ist vorliegend ebenfalls mit einer Treppenfunktion T_{AUFBLENDEN}(t) realisiert, bei der eine Lichtintensität LI der Bilddaten-Ausgabe stufenweise erhöht wird, und/oder bei der eine Unschärfe der Bilddaten-Ausgabe stufenweise verringert wird. Deutlich zu erkennen ist das gilt: UP > DOWN, d.h. das Reduzieren der Wahrnehmbarkeit erfolgt langsamer als das Erhöhen der Wahrnehmbarkeit.

Fig. 4 zeigt einen stark schematisierten Aufbau eines erfindungsgemäßen Systems, mit dem Bilddaten auf einer Ausgabeeinrichtung 201 in einem Fahrzeug optisch ausgebbar sind, umfassend ein im Fahrzeug angeordnetes Sensorsystem 202, das dazu ausgeführt und eingerichtet ist eine Blickrichtung eines Fahrers des Fahrzeugs zu ermitteln, eine Steuereinheit 203, welche die Ausgabeeinrichtung 201 steuert, die dazu ausgeführt und eingerichtet ist, dass sofern die ermittelte Blickrichtung auf die Ausgabeeinrichtung 201 gerichtet wird, ein Ausblenden der optischen Ausgabe der Bilddaten mit einer mittleren Ausblendrate DOWN erfolgt, wobei die Ausblendrate DOWN eine zeitliche Abnahme der optischen Wahrnehmbarkeit der ausgegebenen Bilddaten durch einen Menschen definiert, und sofern die ermittelte Blickrichtung auf die Ausgabeeinrichtung 201 gerichtet ist und von der Ausgabeeinrichtung 201 weg gerichtet wird, ein Aufblenden der optischen Ausgabe der Bilddaten mit einer mittleren Aufblendrate UP erfolgt, wobei die Aufblendrate UP eine zeitliche Zunahme der optischen Wahrnehmbarkeit der ausgegebenen Bilddaten durch einen Menschen beschreibt.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehenden Erläuterungen in der Beschreibung, definiert wird.

## Patentansprüche

1. Verfahren zur Beeinflussung einer optischen Ausgabe von Bilddaten auf einer einem Fahrer und Beifahrer zugeordneten Ausgabeeinrichtung in einem Fahrzeug, mit folgenden Schritten:
- im Fahrzeug Ermitteln (101) einer Blickrichtung eines Fahrers des Fahrzeugs,
- sofern die ermittelte Blickrichtung auf die Ausgabeeinrichtung gerichtet wird, Ausblenden (102) der optischen Ausgabe der Bilddaten **dadurch gekennzeichnet, dass**
- das Ausblenden mit einer mittleren Ausblendrate DOWN erfolgt, wobei die Ausblendrate DOWN eine zeitliche Abnahme der optischen Wahrnehmbarkeit der ausgegebenen Bilddaten durch einen Menschen definiert,
- sofern die ermittelte Blickrichtung auf die Ausgabeeinrichtung gerichtet ist und von der Ausgabeeinrichtung weg gerichtet wird, Aufblenden (103) der optischen Ausgabe der Bilddaten mit einer mittleren Aufblendrate UP, wobei die Aufblendrate UP eine zeitliche Zunahme der optischen Wahrnehmbarkeit der ausgegebenen Bilddaten durch einen Menschen beschreibt, und wobei dabei die mittlere Aufblendrate UP größer als die mittlere Ausblendrate DOWN ist.

2. Verfahren nach Anspruch 1,
bei dem das Ausblenden (102) der optischen Ausgabe der Bilddaten mit einer Treppenfunktion T_{AUSBLENDEN}(t) realisiert wird, bei der eine Lichtintensität LI der Bilddaten-Ausgabe stufenweise verringert wird und/oder bei der eine Unschärfe der Bilddatenausgabe stufenweise erhöht wird.

3. Verfahren nach einem der Ansprüche 1 bis 2,
bei dem das Aufblenden (103) der optischen Ausgabe der Bilddaten mit einer Treppenfunktion T_{AUFBLENDEN}(t) realisiert wird, bei der eine Lichtintensität LI der Bilddaten-Ausgabe stufenweise erhöht wird, und/oder bei der eine Unschärfe der Bilddaten-Ausgabe stufenweise verringert wird.

4. Verfahren nach Anspruch 2 oder 3,
bei dem die Treppenfunktion T_{AUSBLENDEN}(t) und/oder T_{AUFBLENDEN}(t) mit äquidistanten Stützstellen t = tₙ = t₀ + (n-1)*Δt realisiert ist, mit n = 0, 1, 2, ...., t₀:= Startzeit, und Δt:= ein vorgegebener Zeitschritt.

5. Verfahren nach einem der Ansprüche 1 bis 4,
bei dem eine Frequenz ermittelt wird, mit der die Blickrichtung des Fahrers auf die Ausgabeeinheit gerichtet und/oder die Blickrichtung des Fahrers von der Ausgabeeinheit weg gerichtet wird, wobei mit zunehmender Frequenz die Ausblendrate DOWN erhöht wird.

6. Verfahren nach einem der Ansprüche 1 bis 5,
bei dem eine Frequenz ermittelt wird, mit der die Blickrichtung des Fahrers auf die Ausgabeeinheit gerichtet und/oder die Blickrichtung des Fahrers von der Ausgabeeinheit weg gerichtet wird, wobei mit zunehmender Frequenz die Ausblendrate DOWN erhöht und/oder die Aufblendrate UP verringert wird.

7. Verfahren nach einem der Ansprüche 1 bis 6,
bei dem, sofern die ermittelte Blickrichtung auf die Ausgabeeinrichtung gerichtet wird, das Ausblenden (102) der optischen Ausgabe der Bilddaten mit einer mittleren Ausblendrate DOWN mit einem Zeitversatz ZV_{DOWN} beginnt.

8. Verfahren nach einem der Ansprüche 1 bis 7,
bei dem sofern die ermittelte Blickrichtung auf die Ausgabeeinrichtung gerichtet ist und von der Ausgabeeinrichtung weg gerichtet wird, das Aufblenden (103) der optischen Ausgabe der Bilddaten mit einem Zeitversatz ZV_{UP} beginnt.

9. System, mit dem Bilddaten auf einer einem Fahrer und Beifahrer zugeordneten Ausgabeeinrichtung (201) in einem Fahrzeug optisch ausgebbar sind, umfassend
- ein im Fahrzeug angeordnetes Sensorsystem (202), das dazu ausgeführt und eingerichtet ist eine Blickrichtung eines Fahrers des Fahrzeugs zu ermitteln,
- eine Steuereinheit (203), welche die Ausgabeeinrichtung (201) steuert, die dazu ausgeführt und eingerichtet ist, dass
i. sofern die ermittelte Blickrichtung auf die Ausgabeeinrichtung (201) gerichtet wird, ein Ausblenden der optischen Ausgabe der Bilddaten erfolgt,
**dadurch gekennzeichnet, dass**
das Ausblenden mit einer mittleren Ausblendrate DOWN erfolgt, wobei die Ausblendrate DOWN eine zeitliche Abnahme der optischen Wahrnehmbarkeit der ausgegebenen Bilddaten durch einen Menschen definiert, und
ii. sofern die ermittelte Blickrichtung auf die Ausgabeeinrichtung (201) gerichtet ist und von der Ausgabeeinrichtung (201) weg gerichtet wird, ein Aufblenden der optischen Ausgabe der Bilddaten mit einer mittleren Aufblendrate UP erfolgt, wobei die Aufblendrate UP eine zeitliche Zunahme der optischen Wahrnehmbarkeit der ausgegebenen Bilddaten durch einen Menschen beschreibt, wobei
die mittlere Aufblendrate UP größer als die mittlere Ausblendrate DOWN ist.

## Claims

1. Method for influencing an optical output of image data on an output device associated with a driver and passenger in a vehicle, comprising the following steps:
- determining (101), in the vehicle, a viewing direction of a driver of the vehicle,
- if the determined viewing direction is directed to the output device, fading out (102) the optical output of the image data,
**characterized in that**
- the fading out takes place at an average fading-out rate DOWN, the fading-out rate rate DOWN defining a decrease over time of the optical perceptibility of the output image data by a person,
- if the determined viewing direction is directed to the output device and is directed away from the output device, fading in (103) the optical output of the image data at an average fading-in rate UP, the fading-in rate UP describing an increase over time of the optical perceptibility of the output image data by a human, and the average fading-in rate UP in this case being greater than the average fading-out rate DOWN.

2. Method according to claim 1,
in which the fading out (102) of the optical output of the image data is achieved by means of a step function T_{AUSBLENDEN}(t), in which a light intensity LI of the image-data output is incrementally reduced and/or in which a blurring of the image-data output is incrementally increased.

3. Method according to any of claims 1 to 2,
in which the fading in (103) of the optical output of the image data is achieved by means of a step function T_{AUFBLENDEN}(t), in which a light intensity LI of the image-data output is incrementally increased, and/or in which a blurring of the image-data output is incrementally reduced.

4. Method according to claim 2 or 3,
in which the step functionT_{AUSBLENDEN}(t) and/or T_{AUFBLENDEN}(t) is achieved by means of equidistant support points t = t₀ = t₀ + (n-1)*Δt, with n = 0, 1, 2,...., t₀:= start time, and
Δt:= a predetermined time step.

5. Method according to any of claims 1 to 4,
in which a frequency is determined at which the viewing direction of the driver is directed toward the output unit and/or the viewing direction of the driver is directed away from the output unit, wherein the fading-out rate DOWN is increased with increasing frequency.

6. Method according to any of claims 1 to 5,
in which a frequency is determined at which the viewing direction of the driver is directed toward the output unit and/or the viewing direction of the driver is directed away from the output unit, wherein the fading-out rate DOWN is increased and/or the fading-in rate UP is reduced with increasing frequency.

7. Method according to any of claims 1 to 6,
in which, if the determined viewing direction is directed to the output device, the fading out (102) of the optical output of the image data begins at an average fading-out rate DOWN with a time offset ZV_{DOWN}.

8. Method according to any of claims 1 to 7,
in which, if the determined viewing direction is directed to the output device and is directed away from the output device, the fading in (103) of the optical output of the image data begins with a time offset ZV_{UP}.

9. System by means of which image data can be optically output in a vehicle on an output device (201) associated with a driver and passenger, comprising
- a sensor system (202) arranged in the vehicle, which sensor system is designed and configured to determine a viewing direction of a driver of the vehicle,
- a control unit (203) which controls the output device (201), which control unit is designed and configured such that
i. if the determined viewing direction is directed to the output device (201), fading out of the optical output of the image data takes place,
**characterized in that**
the fading out takes place at an average fading-out rate DOWN, the fading-out rate DOWN defining a decrease over time of the optical perceptibility of the output image data by a person, and
ii. if the determined viewing direction is directed to the output device (201) and is directed away from the output device (201), a fading in of the optical output of the image data takes place at an average fading-in rate UP, the fading-in rate UP describing an increase over time of the optical perceptibility of the output image data by a person,
the average fading-in rate UP being greater than the average fading-out rate DOWN.

## Revendications

1. Procédé permettant d'influencer une sortie optique de données d'image sur un dispositif de sortie dans un véhicule, lequel dispositif est associé à un conducteur et à un passager avant, comportant les étapes suivantes :
- détermination (101), dans le véhicule, d'une direction du regard d'un conducteur du véhicule,
- masquage (102) de la sortie optique des données d'image dès lors que la direction du regard déterminée est dirigée vers le dispositif de sortie
**caractérisé en ce que**
- le masquage est effectué avec un taux de masquage moyen DOWN, dans lequel le taux de masquage DOWN définit une diminution temporelle de la perceptibilité optique, par une personne, des données d'image émises en sortie,
- dès lors que la direction du regard déterminée est dirigée vers le dispositif de sortie et est dirigée à l'écart du dispositif de sortie, affichage (103) de la sortie optique des données d'image avec un taux d'affichage moyen UP, dans lequel le taux d'affichage UP décrit une croissance temporelle de la perceptibilité optique, par une personne, des données d'image émises en sortie, et dans lequel le taux d'affichage moyen UP est ainsi supérieur au taux de masquage moyen DOWN.

2. Procédé selon la revendication 1,
dans lequel le masquage (102) de la sortie optique des données d'image est réalisé avec une fonction en escalier T_{MASQUAGE}(t) dans laquelle une intensité lumineuse Ll de la sortie des données d'image est progressivement réduite et/ou dans laquelle un flou de la sortie des données d'image est progressivement augmenté.

3. Procédé selon l'une des revendications 1 à 2,
dans lequel l'affichage (103) de la sortie optique des données d'image est réalisé avec une fonction en escalier T_{AFFICHAGE}(T) dans laquelle une intensité lumineuse Ll de la sortie des données d'image est progressivement augmentée et/ou dans laquelle un flou de la sortie des données d'image est progressivement réduit.

4. Procédé selon la revendication 2 ou 3,
dans lequel les fonctions en escalier T_{MASQUAGE}(t) et/ou T_{AFFICHAGE}(T) sont réalisées avec des points de grille équidistants t = t₀ = t₀ + (n-1)*Δt, avec n = 0, 1, 2, ...., t₀: = heure de début, et Δt: = un pas de temps prédéfini.

5. Procédé selon l'une des revendications 1 à 4,
dans lequel une fréquence est déterminée, à laquelle la direction du regard du conducteur est dirigée vers l'unité de sortie et/ou la direction du regard du conducteur est dirigée à l'écart de l'unité de sortie, dans lequel le taux de masquage DOWN est augmenté à mesure que la fréquence croît.

6. Procédé selon l'une des revendications 1 à 5,
dans lequel une fréquence est déterminée, à laquelle la direction du regard du conducteur est dirigée vers l'unité de sortie et/ou la direction du regard du conducteur est dirigée à l'écart de l'unité de sortie, dans lequel le taux de masquage DOWN est augmenté et/ou le taux d'affichage UP est réduit à mesure que la fréquence croît.

7. Procédé selon l'une des revendications 1 à 6,
dans lequel, dès lors que la direction du regard déterminée est dirigée vers le dispositif de sortie, le masquage (102) de la sortie optique des données d'image commence avec un taux de masquage moyen DOWN comportant un décalage temporel ZV_{DOWN}.

8. Procédé selon l'une des revendications 1 à 7,
dans lequel, dès lors que la direction du regard déterminée est dirigée vers le dispositif de sortie et est dirigée à l'écart du dispositif de sortie, l'affichage (103) de la sortie optique des données d'image commence avec un décalage temporel ZV_{UP}.

9. Système, au moyen duquel des données d'image peuvent être émises en sortie de manière optique vers un dispositif de sortie (201) dans un véhicule, lequel dispositif est associé à un conducteur et à un passager avant, comprenant
- un système capteur (202) disposé dans le véhicule, réalisé et configuré pour déterminer une direction du regard d'un conducteur du véhicule,
- une unité de commande (203) qui commande le dispositif de sortie (201), lequel est réalisé et configuré de sorte que
i. un masquage de la sortie optique des données d'image est effectué dès lors que la direction du regard déterminée est dirigée vers le dispositif de sortie (201),
**caractérisé en ce que**
le masquage est effectué avec un taux de masquage moyen DOWN, dans lequel le taux de masquage DOWN définit une diminution temporelle de la perceptibilité optique, par une personne, des données d'image émises en sortie, et
ii. dès lors que la direction du regard déterminée est dirigée vers le dispositif de sortie (201) et est dirigée à l'écart du dispositif de sortie (201), un affichage de la sortie optique des données d'image est effectué avec un taux d'affichage moyen UP, dans lequel le taux d'affichage UP décrit une croissance temporelle de la perceptibilité optique, par une personne, des données d'image émises en sortie, dans lequel
le taux d'affichage moyen UP est supérieur au taux de masquage moyen DOWN.
